# NEUE EUROPÄISCHE PATENTSCHRIFT

(11) **EP 1 670 121 B2**
(45) Veröffentlichungstag und Bekanntmachung des Hinweises auf die Entscheidung über den Einspruch: **04.04.2012**
(45) Hinweis auf die Patenterteilung: 05.11.2008
(21) Anmeldenummer: 05023966.4
(22) Anmeldetag: 03.11.2005
(51) Int. Cl.: H02K 3/493, H02K 15/02

(54) **Elektrische Maschine, insbesondere bürstenloser Gleichstrommotor**
Electrical machine, especially brushless DC motor
Machine électrique, moteur à courant continu sans balais en particulier

(30) Priorität: 03.08.2005 DE 102005036558; 22.11.2004 DE 102004056303
(43) Veröffentlichungstag der Anmeldung: 14.06.2006
(73) Patentinhaber: MINEBEA Co., Ltd., Kitasaku-gun, Nagano-ken 3849-2100 (JP)
(72) Erfinder: Hauger, Willi, 78050 Villingen-Schwennigen (DE); Ganter, Helmut, 78073 Dürrheim (DE); Hans, Helmut, Dr., 78112 Sankt Georgen (DE)
(74) Vertreter: Liesegang, Eva

(56) Entgegenhaltungen:
- EP-A- 0 650 246
- EP-A- 0 788 215
- EP-A- 1 354 653
- US-A1- 2004 108 789
- US-A1- 2004 145 267

## Beschreibung

Die Erfindung betrifft eine elektrische Maschine, insbesondere einen bürstenlosen Gleichstrommotor, gemäß dem Oberbegriff von Patentanspruch 1. Eine solche Maschine ist aus der US 2002/0047 425 A1 bekannt. In der EP 0 650 246 A1 ist eine weitere elektrische Maschine beschrieben bei der eingebettete Permanentmagnete tangential orientiert sind. Es ist auch grundsätzlich bekannt, eingebettete Permanentmagnete anders auszurichten, z.B. speichenartig, wie in der EP 1 354 653 A1 gezeigt.

Ein bevorzugtes Anwendungsgebiet der Erfindung sind bürstenlose Gleichstrommotoren und andere Permanentmagnetmotoren, die als Innenläufer- oder Außenläufermotor konfiguriert sein können. Elektromotoren, auf welche die Erfindung anwendbar ist, weisen einen Rotorkörper auf, der auf eine Welle aufgebracht ist, wobei Permanentmagnete in den Rotorkörper, vorzugsweise speichenartig, eingebettet sind. Ferner umfassen die Motoren eine Statoranordnung, die üblicherweise aus einer Anzahl paketierter Metallbleche aufgebaut ist, welche einen ringförmigen Statorrückschluß bilden, von dem Statorzähne radial nach innen bzw. außen abstehen. Die Statorzähne bilden die Statorpole, zwischen denen Statornuten zur Aufnahme von Wicklungen gebildet sind. Die Rotoranordnung ist koaxial in die Statoranordnung eingefügt (bei der Innenläuferkonfiguration) bzw. umgibt diese koaxial (bei der Außenläuferkonfiguration).

Bei Betrieb bürstenloser Gleichstrommotoren ist es für die Erzeugung von Kommutierungssignalen notwendig, die Drehlage des Rotors zu erfassen. Ferner ist es in verschiedenen Anwendungen vorteilhaft, auch die Drehgeschwindigkeit und die Drehrichtung zu erfassen. Zu diesem Zweck werden im Stand der Technik üblicherweise Drehlagesensoren verwendet. Solche Drehlagensensoren sind in der Praxis meist Hall-Elemente, wobei auch andere Magnetsensoren, wie beispielsweise MR (Magneto Resistive) oder GMR (Giant Magneto Resistive) Sensorelemente bekannt sind.

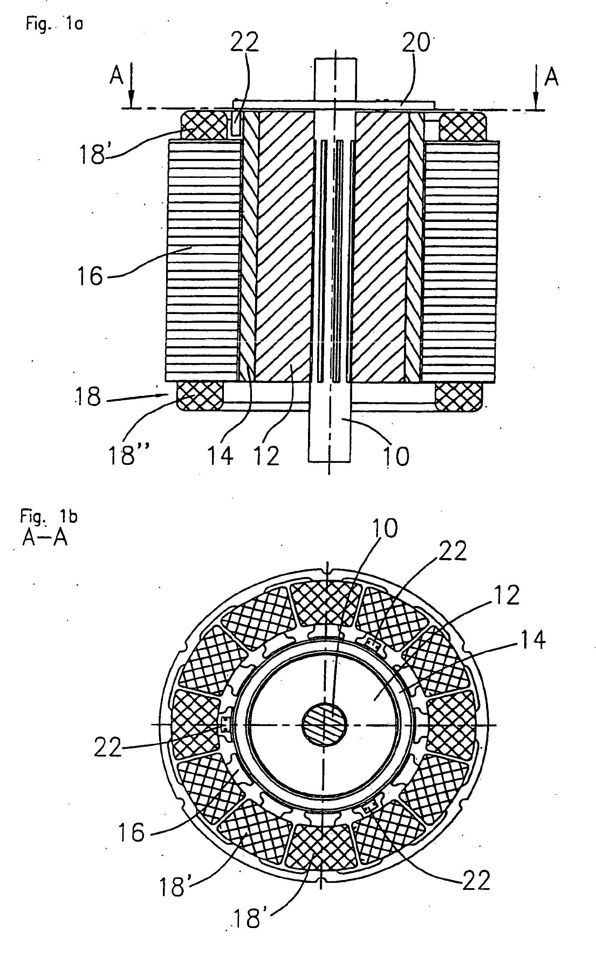

Bei Motoren, bei denen die Magnete auf dem Umfang eines ringförmigen Rotorrückschlusses angeordnet sind, ist es bekannt, sogenannte stehende, bedrahtete Hall-Elemente einzusetzen, welche die Polarität des radial aus dem Rotor austretenden Magnetfeldes erfassen können. Eine solche Anordnung ist in den Fig. 1a und 1b dargestellt. Fig. 1a zeigt eine Längsschnittdarstellung durch einen bürstenlosen Gleichstrommotor gemäß dem Stand der Technik; Fig. 1b zeigt eine Schnittdarstellung durch die Ebene A-A der Fig. 1a.

Der Motor umfaßt eine Welle 10, die eine Rotoranordnung trägt. Die Rotoranordnung umfaßt einen Rotorrückschluß 12 und einen oder mehrere auf den Außenumfang des Rotorrückschlusses 12 aufgebrachte Permanentmagnete 14. Die Rotoranordnung ist koaxial in eine Statoranordnung eingefügt, welche einen Statorkörper 16 und Wicklungen 18 aufweist. Der Statorkörper 16 wird beispielsweise durch einen stanz-paketierten Blechstapel gebildet. Die Wicklung 18 ist in Fig. 1a durch ihre Wickelköpfe 18', 18" schematisch dargestellt.

Wie in Fig. 1a zu erkennen ist, ist die Rotoranordnung 12, 14 in axialer Richtung verlängert und erstreckt sich an einem Stirnende ungefähr bis zur Höhe des korrespondierenden Wickelkopfes 18'. An diesem Stirnende ist eine Platine 20 angeordnet, die Hall-Elemente 22 trägt. Die axiale Verlängerung der Rotoranordnung 12, 14 hat den Zweck, daß die Hall-Elemente die radiale Feldkomponente des Rotormagneten 14d detektieren..

Die Verlängerung der Rotoranordnung 12, 14 in axialer Richtung verursacht nicht zu vernachlässigende Mehrkosten für ferromagnetisches und magnetisches Material sowie einen gewissen zusätzlichen Herstellungsaufwand. Weiterhin werden die Hall-Elemente 22 durch die Magnetfelder der benachbarten Statorspulen gestört.

In der Anordnung des Standes der Technik, die in den Fig. 1a und 1b gezeigt ist, werden für die Hall-Elemente 22 vorzugsweise bedrahtete Bauteile verwendet, die auf der Leiterplatte 20 verlötet werden müssen, was Mehrkosten verursacht. In dieser Ausführung wird das radiale Streufeld der Permanentmagnete 22 erfaßt.

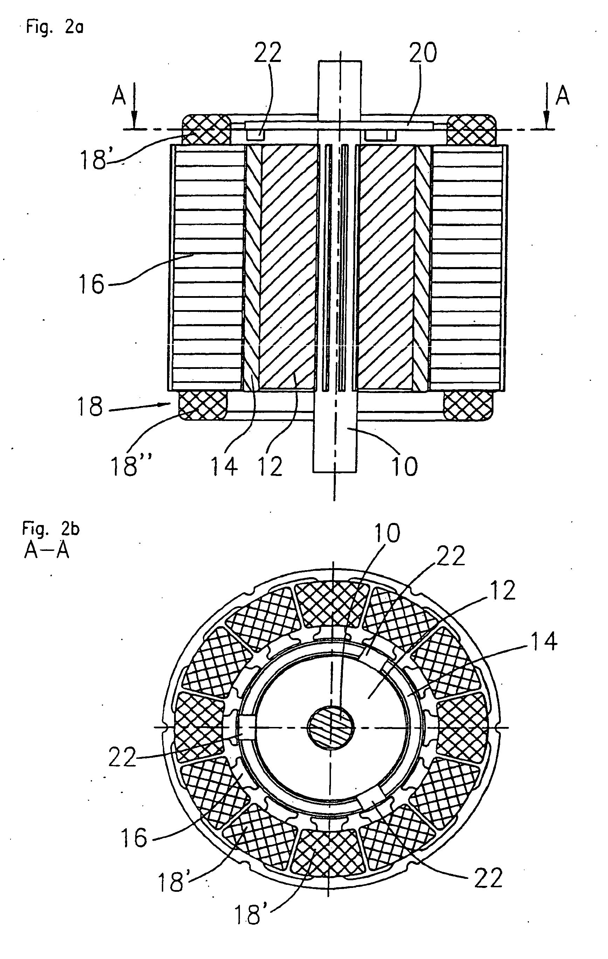

Im Stand der Technik ist es auch bekannt, das axiale Streufeld der Permanentmagnete einer Rotoranordnung zu erfassen. Ein Beispiel hiervon ist in den Fig. 2a und 2b gezeigt. In den Fig. 2a und 2b sind ähnliche Teile wie in den vorhergehenden Figuren mit denselben Bezugszeichen gekennzeichnet. Auch in der Fig. 2a sind die Permanentmagnete 14 auf dem Außenumfang des Rotorkörpers 12 angeordnet. In diesem Fall ist der Rotorkörper jedoch nicht in axialer Richtung verlängert, sondern an seinem Stirnende ist eine Platine 20 angeordnet, die Hall-Elemente 22 trägt und dem Stirnende der Rotoranordnung 12, 14 gegenüberliegt. Die Platine 20 kommt innerhalb des Wickelkopfs 18' zu liegen. Diese Ausführung hat den Vorteil, daß die Rotoranordnung in axialer Richtung nicht verlängert werden muß, so daß im Vergleich zur ersten Ausführung Material gespart und die Bauhöhe des Motors nicht vergrößert wird. Nachteilig an dieser Variante ist, daß das axiale Streufeld der Permanentmagnete 14 wesentlich schwächer ist als das radiale Streufeld, so daß die Hall-Elemente 22 nur ein entsprechend schwaches Signal empfangen und auswerten können.

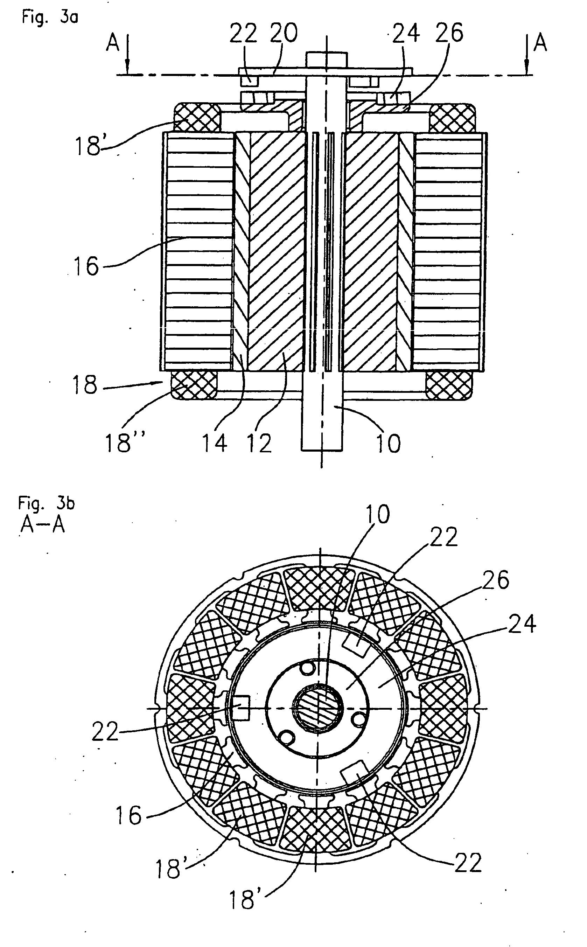

Eine weitere Möglichkeit zur Drehlageerfassung gemäß dem Stand der Technik ist in den Fig. 3a und 3b illustriert.

Die Rotoranordnung und die Statoranordnung der Fig. 3a und 3b entsprechen vollständig denen der Fig. 2a und 2b. Anders als bei den zuvor beschriebenen Ausführungen wird jedoch weder das axiale noch das radiale Streufeld der Permanentmagnete 14 des Rotors zum Erfassen der Drehlage der Rotoranordnung 12, 14 verwendet. Statt dessen sind von den Permanentmagneten 14 getrennte Sensormagnete 24 auf einem separaten Träger 26 angeordnet, der an einem Stirnende der Rotoranordnung 12, 14 liegt und drehfest mit der Welle 10 verbunden ist. Die Hall-Elemente 22 sind auf einer Platine 20 angeordnet, welche die Hall-Elemente zu den Sensormagneten 24 ausrichtet, wie in Fig. 3a gezeigt. In dieser Ausführung sind die Sensormagnete 24 beispielsweise in axialer Richtung magnetisiert und können mit einem solchen Abstand von den Statorwicklungen 18 angeordnet werden, daß die Wicklungen keine nennenswerten Störungen bewirken können. Der Durchmesser der Sensormagnete 24 ist unabhängig von dem der Permanentmagnete 14, so daß die Anordnung der Hall-Elemente 22 auf der Platine 20 und deren relative Lage zu den Sensormagneten 24 unabhängig davon optimiert werden kann, wo die Permanentmagnete 14 angeordnet sind.

Ein ähnlicher Stand der Technik ist in der US 2004/0108789 A1 gezeigt. Diese Anmeldung beschreibt eine Anordnung zur Erfassung der Drehlage eines Gleichstrommotors, die an einem Stirnende des Motors angeordnet ist. Die Anordnung umfasst eine Magnetgeberscheibe, die mit Hall-Sensoren zusammenarbeitet und ähnlich wie ein Generator aufgebaut ist.

Während mit der Anordnung der Fig. 3a, 3b gute Meßergebnisse bezüglich der Rotorlage der Rotoranordnung 12, 14 erzielt werden können, verursacht diese Anordnung zusätzlichen Aufwand bei der Montage des Motors und verlängert insgesamt die axiale Baulänge des Motors. Weiterhin müssen die Rotormagnete und der Sensormagnetring zueinander ausgerichtet werden.

Der Erfindung liegt die Aufgabe zugrunde, eine elektrische Maschine, insbesondere einen bürstenlosen Gleichstrommotor anzugeben, die mit konstruktiv einfachen Mitteln eine zuverlässige Erfassung der Drehlage des Motors ermöglicht. Diese Aufgabe wird durch eine elektrische Maschine mit den Merkmalen von Patentanspruch 1 gelöst.

Die Erfindung sieht eine elektrische Maschine, insbesondere einen bürstenlosen Gleichstrommotor, mit den Merkmalen von Patentanspruch 1 vor.

Die Verwendung von Magnetsensoren in Verbindung mit speichenförmig eingebetteten Permanentmagneten zur Detektion des axialen Streufeldes eines Rotors zur Erfassung der Drehlage des Rotors hat wesentliche Vorteile, die sich bei Rotoranordnungen mit auf deren Umfang aufgebrachten Permanentmagneten nicht ergeben, so daß der oben beschriebene Stand der Technik auf die Erfindung nicht ohne weiteres übertragbar ist.

Während ein Fachmann zunächst davon abgehalten sein kann, die mit Bezug auf die Fig. 1 und 2 beschriebene Technik auf Rotoren mit eingebetteten Permanentmagneten zu übertragen, hat der Erfinder festgestellt, daß Rotoren mit eingebetteten Permanentmagneten für die Zwecke der Erfindung den großen Vorteil haben, daß sie ein hohes axiales Streufeld im Bereich des Stirnendes des Rotors erzeugen. Der oder die Magnetsensoren werden dem Stirnende des Rotors gegenüberliegend, ähnlich wie in der Ausführung der Fig. 2a, 2b, angeordnet, um den axialen Streufluß dieser in den Rotor eingebetteten Permanentmagnete zu erfassen.

Erfindungsgemäß sind in dem Rotorkörper Ausnehmungen zum Aufnehmen der Permanentmagnete ausgebildet, die wenigstens an dem einen Stirnende offen sind, an dem der oder die Magnetsensoren angeordnet sind. Dadurch kann ein besonders großes axiales Streufeld erfaßt werden.

Erfindungsgemäß sind die Magnetsensoren direkt auf einer Leiterplatte angeordnet. Abhängig von dem Abstand zum Stirnende der Rotoranordnung können die Magnetsensoren "stehend" oder "liegend" angeordnet werden, um eine tangentiale Komponente bzw. eine axiale Komponente des axialen magnetischen Streufeldes der Permanentmagnete zu erfassen. Bevorzugt werden "liegende" Sensoren zur Detektion der axialen Streuflußkomponente verwendet.

Die erfindungsgemäße Lösung erfordert im Vergleich zu den Lösungen des Standes der Technik keinen Mehraufwand für die Montage sowie keine Mehrkosten für zusätzliches Magnetmaterial und dergleichen. Im Vergleich zur Ausführung der Fig. 3a ist der Aufwand merklich reduziert, weil keine getrennten Sensormagnete sowie keine positionsgenaue Ausrichtung dieser Magnete zu den Permanentmagneten des Rotors erforderlich sind. Aufgrund des hohen axialen Streufeldes der eingebetteten Permanentmagnete ist ein vergleichsweise großer Abstand der Magnetsensoren zu dem Rotor von bis zu einem Millimeter möglich, ohne daß die Qualität der erfaßten Signale darunter signifikant leiden würde. Auch die Abstandstoleranzen für die Montage der Magnetsensoren sind höher als bei den Lösungen des Standes der Technik. Weiterhin können zur Messung der axialen Feldkomponente der eingebetteten Rotormagnete liegende Hallsensoren, insbesondere in SMD-Bauweise, verwendet werden, was eine kostengünstige Fertigung ermöglicht.

Bei Drehlagegebern mit separaten Sensormagneten gemäß dem Stand der Technik muß dagegen nach der Montage der Sensormagnete eine Zuordnung zwischen den einzelnen Sensormagneten bzw. dem Sensormagnetring und den Permanentmagneten des Rotors vorgenommen werden, um einen Versatz zwischen dem Sensormagnetring und den Permanentmagneten zu vermeiden. Eine mögliche Fehlpositionierung der Sensormagnete würde zu einem fehlerhaften Kommutierungssignal führen. Werden separate Sensormagnete vorgesehen, die oftmals in Form eines mit dem Rotor drehfest verbundenen Magnetträgerrings realisiert sind, entstehen ferner zusätzliche Toleranzen, welche die Positionsabweichung der gemessenen Position verfälschen können. Die Lösungen des Standes der Technik, welche ohne separate Sensormagnete arbeiten, haben dagegen den Nachteil, daß die erfaßten Signale entweder zu schwach sind (Lösungen der Fig. 2a, 2b) oder daß es notwendig ist, den Rotor zu verlängern, was zu merkbaren Mehrkosten führt (Fig. 1a, 1b).

Eine Ausgestaltung der Erfindung sieht vor, den Rotorkörper mit nicht magnetischem Material, wie etwa Kunststoff oder Aluminium, zu verschließen. Hierdurch wird das axiale Streufeld der eingebetteten Magneten nicht verringert.

Die Magnetsensoren sind auf einem Kreisring angeordnet, dessen Radius zwischen dem Innen- bzw. Außenradius der eingebetteten Permanentmagnete liegt. Mit anderen Worten liegen die Magnetsensoren somit auf dem Kreisring, der durch die Abmessungen der Permanentmagnete definiert wird. Beispiele für verwendete Magnetsensoren sind Hall-Sensoren, MR-Sensoren und GMR Sensoren, wobei bevorzugt zwei oder drei oder vier Magnetsensoren an dem Stirnende des Rotorkörpers um 180°, 120° oder 90° elektrisch versetzt angeordnet sind.

In einer weiteren Ausführung der Erfindung ist zwischen der Rotoranordnung und der Statoranordnung eine Hülse eingebracht, wie sie beispielsweise in der deutschen Patentanmeldung DE 10 2004 056 303.9 (nicht vorveröffentlicht) beschrieben ist. Diese Hülse kann aus einem ferromagnetischen Material bestehen und ist mit den freien Enden der Statorzähne verbunden. Zwischen den einzelnen Polen weist die Hülse Schlitze oder entmagnetisierte Zonen auf, um die Pole magnetisch voneinander zu trennen. Vorzugsweise steht die Hülse an dem einen Stirnende der Rotoranordnung, an dem die Magnetsensoren liegen, in axialer Richtung über das Stirnende vor. Dadurch kann das Stator-Magnetfeld zum Rotor hin abgeschirmt werden und somit auch nicht die Erfassung der Drehlage des Rotors verfälschen. Durch die abschirmende Wirkung der axial vorstehenden Hülse werden die Magnetsensoren nicht durch das Magnetfeld des Stators beeinflußt und können somit die Drehlage des Rotors genauer bestimmen.

Die Erfindung ist im folgenden anhand einer bevorzugten Ausführung mit Bezug auf die Zeichnung näher erläutert. In den Figuren zeigen:
- Fig. 1a: eine Längsschnittdarstellung durch einen bürstenlosen Gleichstrommotor gemäß dem Stand der Technik;
- Fig. 1b: eine Querschnittdarstellung durch den Motor der Fig. 1a entlang der Linie A-A;
- Fig. 2a: eine Längsschnittdarstellung durch einen bürstenlosen Gleichstrommotor gemäß dem Stand der Technik;
- Fig. 2b: eine Querschnittdarstellung durch den Motor der Fig. 2a entlang der Linie A-A;
- Fig. 3a: eine Längsschnittdarstellung durch einen bürstenlosen Gleichstrommotor gemäß dem Stand der Technik;
- Fig. 3b: eine Querschnittdarstellung durch den Motor der Fig. 3a entlang der Linie A-A;
- Fig. 4a: eine Längsschnittdarstellung durch einen bürstenlosen Gleichstrommotor gemäß der Erfindung;
- Fig. 4b: eine Querschnittdarstellung durch den Motor der Fig. 4a entlang der Linie A-A;
- Fig. 4c: eine Querschnittdarstellung durch den Motor der Fig. 4a entlang der Linie B-B;
- Fig. 5: eine Querschnittdarstellung durch einen Teil des erfindungsgemäßen Elektromotors, die ähnlich der Darstellung der Fig. 4c ist, zur Erläuterung der Lage der Magnetsensoren; und
- Fig. 6: eine perspektivische Außenansicht des erfindungsgemäßen Elektromotors.

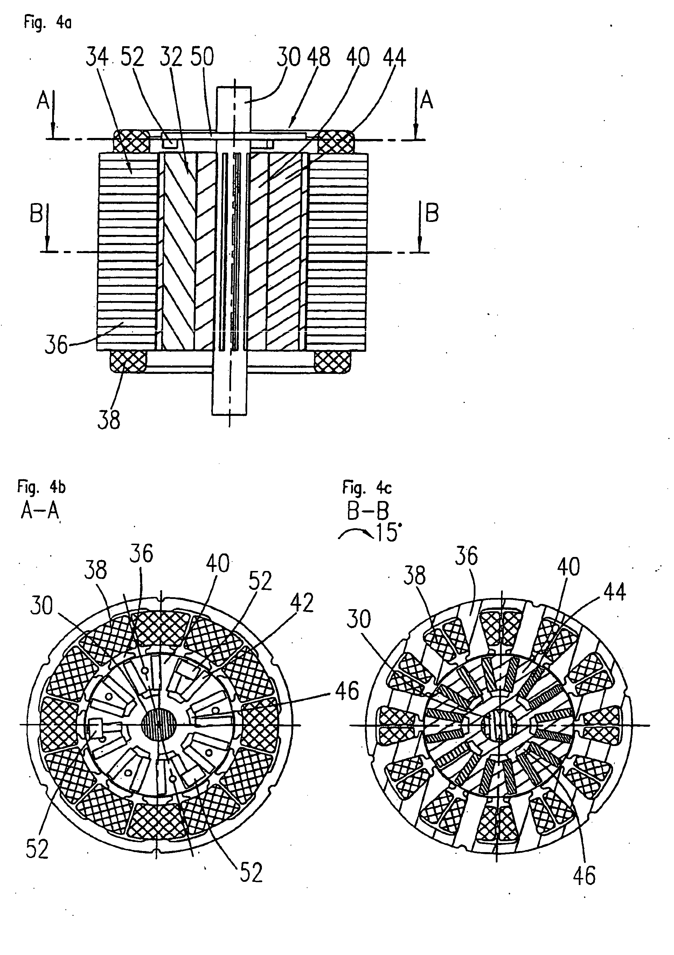

Wie in den Fig. 4a bis 4c dargestellt, umfaßt der erfindungsgemäße Elektromotor, der vorzugsweise als bürstenloser Gleichstrommotor ausgebildet ist, eine Welle 30, die eine Rotoranordnung 32 trägt. Die Rotoranordnung 32 ist koaxial in eine Statoranordnung eingefügt, welche grundsätzlich wie im Stand der Technik aufgebaut ist. Das heißt, die Statoranordnung 34 umfaßt einen Statorkörper 36 und Wicklungen 38. Der Statorkörper 36 kann als stanzpaketiertes Blechpaket aufgebaut sein, das einen Statorrückschlußring mit Statorpolen, welche Wicklungen 38 tragen, bildet, wie am besten in Fig. 4c zu erkennen ist. Die Rotoranordnung 32 umfaßt einen Rotorkörper 40, der speichenartige Ausnehmungen 42 aufweist, in die Permanentmagnete 44 eingefügt sind. In der bevorzugten Ausführung sind die Ausnehmungen 42 zur Aufnahme der Permanentmagnete jeweils paarweise durch eine Aussparung 46 überbrückt. Diese Aussparung 46 dient zur Unterdrückung von radialen Streuflüssen im Inneren der Rotoranordnung 32 zur Welle 30 hin.

Wie aus der Zusammenschau der Fig. 4a und 4b zu erkennen, erstrecken sich die Ausnehmungen 42 in axialer Richtung über die gesamte Länge des Rotorkörpers 40 und sind an dessen Stirnenden offen, so daß die Permanentmagnete 44 an den Stirnenden des Rotors ein relativ großes seitliches Streufeld abgeben.

An einem Stirnende der Rotoranordnung 32 ist eine Sensoranordnung 48 positioniert, wobei die Sensoranordnung 48 im wesentlichen innerhalb des Wickelkopfes der Wicklung 38 zu liegen kommt. Die Sensoranordnung 48 umfaßt eine Platine 50 und Magnetsensoren 52, die auf der Platine angebracht sind. Die Platine 50 ist mit dem Stator bzw. mit einem Flansch verbunden. Der Flansch trägt bevorzugt Lager zur Lagerung der Rotorwelle. Die Magnetsensoren 52 sind vorzugsweise Hall-Elemente, wobei auch andere Magnetsensoren, wie GMR-Sensoren und MR-Sensoren, verwendet werden können. Die Magnetsensoren 52 können abhängig vom Abstand zu den eingebetteten Permanentmagneten 44 stehend oder liegend angeordnet werden, um eine tangentiale oder eine axiale Komponente des axialen Streufeldes der Permanentmagnete 44 zu erfassen. Eine "stehende" Anordnung der Magnetsensoren 52 bedeutet, daß die Erfassungsrichtung der Sensoren parallel zur Stirnfläche des Rotors ist, und eine "liegende" Anordnung bezeichnet eine hierzu senkrechte Ausrichtung der Magnetsensoren.

Vorzugsweise werden drei Magnetsensoren verwendet, die um 120° elektrisch versetzt angeordnet sind. Ein Verfahren zum Justieren der Sensoranordnung 48 zur Bestimmung der Drehlage des Rotors sowie eine mögliche Art der Erfassung und Auswertung der Signale der Magnetsensoren 52 ist in dem deutschen Patent DE 102 53 388 derselben Anmelderin beschrieben.

Die Erfindung hat den Vorteil, daß die Signalabstände der Magnetsensoren 52 identisch mit der magnetischen Pollänge der Permanentmagnete 44 des Rotors sind, so daß das notwendige Signal zur Motor-Kommutierung unmittelbar von den Magnetsensoren 52 abgeleitet werden kann. Da das axiale Streufeld des Rotors mit eingebetteten Permanentmagneten 44 in der erfindungsgemäßen Ausführung relativ hoch ist, kann ein vergleichsweise großer Abstand der Magnetsensoren 52 zum Stirnende der Rotoranordnung 32 von bis zu 1mm vorgesehen werden. Auch die Abstandstoleranzen können entsprechend hoch sein. Dies ermöglicht eine kostengünstige Fertigung des Drehlagesensors.

In einer bevorzugten Ausführung der Erfindung werden die vorzugsweise analogen Ausgangssignale der Magnetsensoren 52 erfaßt und mit den Signalen eines präzisen Referenzsensors verglichen, um anschließend Korrekturwerte zu erzeugen und abzuspeichern. Die aufgrund der Magnetsensoren 52 ermittelten Positionswerte können mit Hilfe dieser Korrekturwerte korrigiert und zur Weiterverarbeitung über eine elektronische Schnittstelle, wie ein Bussystem, an eine übergeordnete Regelung oder Steuerung des Motors weitergegeben werden. Dadurch kann das Ausgangssignal der Magnetsensoren 52 nicht nur zur Erzeugung von Signalen für die Motor-Kommutierung, sondern darüber hinaus auch zur Ermittlung von Position, Drehrichtung und Drehzahl des Elektromotors verwendet werden. Diesbezüglich wird auf das obengenannte Patent derselben Anmelderin Bezug genommen.

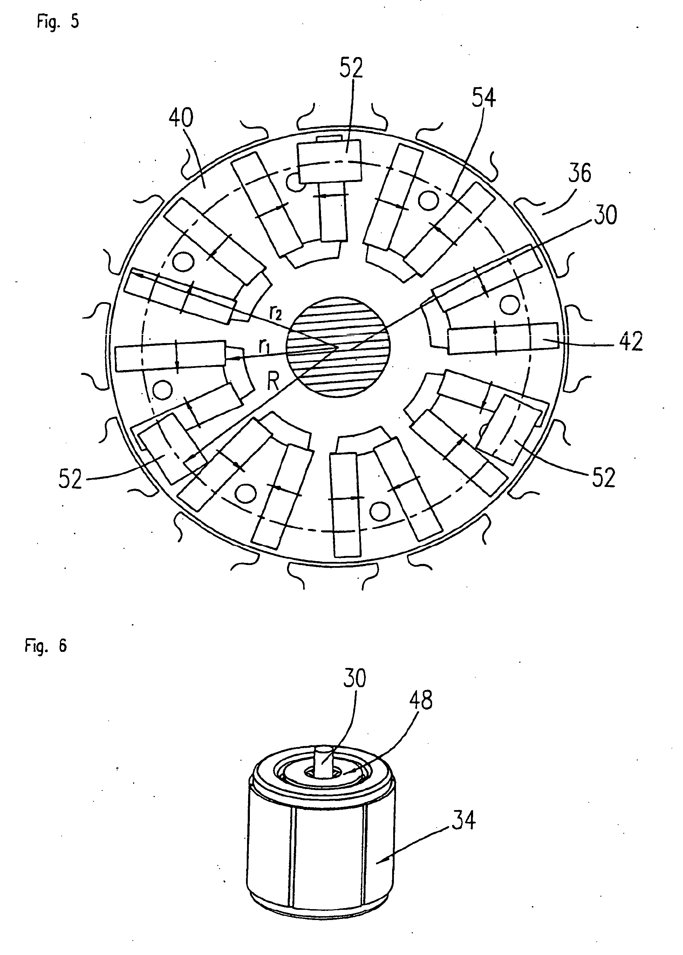

Fig. 5 zeigt einen Ausschnitt der Fig. 4b in anderer Darstellung, wobei die Statoranordnung weitgehend weggelassen ist. Die Magnetisierungsrichtung der Permanentmagnete 44 ist durch Pfeile (N→ S) gekennzeichnet. In Fig. 5 ist eine Kreislinie 54 mit einem Radius R, auf der die Magnetsensoren 52 angeordnet sind, gestrichelt dargestellt. Diese Kreislinie liegt innerhalb einer (gedachten) Kreisscheibe, welche durch den minimalen (r1) und den maximalen (r2) Radius der Permanentmagnete 44 bestimmt ist. Mit anderen Worten werden die Magnetsensoren 52 an der Stirnseite der Rotoranordnung 32 so angeordnet, daß sie den korrespondierenden Stirnenden der Permanentmagnete 44 gegenüberliegen, um einen möglichst großen Anteil des axialen Streufeldes zu erfassen. Die Magnetsensoren 42 sind vorzugsweise um 120° elektrisch zueinander versetzt. Diese Anordnung gewährleistet eine vergleichsweise große Toleranz gegenüber einer Fehllage der Sensoren.

Fig. 6 veranschaulicht in Verbindung Fig. 4a, daß der erfindungsgemäße Elektromotor einschließlich der Sensoranordnung 48 mit geringem zusätzlichem Aufwand im Vergleich zu einem Elektromotor ohne Sensoranordnung hergestellt werden kann, wobei sich das Bauvolumen des Motors insgesamt nicht vergrößert.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausführungen von Bedeutung sein. Wenn die Magnetsensoren weiter in Richtung des Innenkreises verschoben werden, d.h. beispielsweise in der Fig. 5 in Richtung des Radius r₁, kann sichergestellt werden, daß die erfaßten axialen Streufelder weitgehend unabhängig von dem Statorfeld sind. Wie einleitend beschrieben, ist es auch möglich, Stator und Rotor durch eine ferromagnetische Hülse zu trennen, wie aus der nicht vorveröffentlichten DE 10 2004 056 303 bekannt ist.

### Bezugszeichenliste

- 10: Welle
- 12: Rotorkörper
- 14: Permanentmagnete
- 16: Statorkörper
- 18: Wicklungen
- 18', 18": Wickelköpfe
- 20: Platine
- 22: Hall-Elemente
- 24: Sensormagnete
- 26: Träger

- 30: Welle
- 32: Rotoranordnung
- 34: Statoranordnung
- 36: Statorkörper
- 38: Wicklungen
- 40: Rotorkörper
- 42: Ausnehmungen
- 44: Permanentmagnete
- 46: Aussparung
- 48: Sensoranordnung
- 50: Platine
- 52: Magnetsensoren
- 54: Kreislinie

## Patentansprüche

1. Elektrische Maschine, insbesondere bürstenloser Gleichstrommotor, mit einer Statoranordnung (34) und einer Rotoranordnung (32), die koaxial in die Statoranordnung eingefügt ist, wobei die Statoranordnung eine Wicklung (38) und die Rotoranordnung einen Rotorkörper (40) mit kreiszylindrischem Außenumfang und in den Rotorkörper eingebettete Permanentmagnete (44) aufweist, wobei Magnetsensoren (52) zur Erfassung des axialen Streufeldes der eingebetteten Permanentmagnete (44) an einem Stirnende des Rotorkörpers angeordnet sind, um die Drehlage des Rotorkörpers (40) zu ermitteln, wobei die Permanentmagnete (44) in dem Rotorkörper (40) speichenartig angeordnet sind, ihre Abmessung in radialer Richtung größer ist als ihre Abmessung in tangentialer Richtung und wobei die Permanentmagnete in tangentialer Richtung magnetisiert sind und wobei in dem Rotorkörper (40) Ausnehmungen (42) zum Aufnehmen der Permanentmagnete (44) ausgebildet sind, die an wenigstens dem einen Stirnende, an dem die Magnetsensoren angeordnet sind, offen sind, **dadurch gekennzeichnet, dass** die Magnetsensoren auf einer Leiterplatte (50), angeordnet sind, die im wesentlichen innerhalb des Wickelkopfes der Wicklung (38) zu liegen kommt, wobei die Magnetsensoren auf der Leiterplatte auf einem Kreisring angeordnet sind, der durch den Innenradius (r₁) und den Außenradius (r₂) der Permanentmagnete bestimmt ist, und dem Stirnende des Rotorkörpers unmittelbar gegenüberliegen, und wobei die Ausnehmungen am Außenumfang des Rotors geschlossen sind.

2. Maschine nach einem der vorangehenden Ansprüche, **dadurch gekennzeichnet, dass** die Magnetsensoren (52) Hall-Sensoren, MR- oder GMR-Sensoren umfassen.

3. Maschine nach einem der vorangehenden Ansprüche, **dadurch gekennzeichnet, dass** zwei oder drei oder vier Magnetsensoren (52) an dem Stirnende des Rotorkörpers (40) um 180°, 120° oder 90° elektrisch versetzt angeordnet sind.

4. Maschine nach einem der vorangehenden Ansprüche, **dadurch gekennzeichnet, dass** zwischen der Rotoranordnung (32) und der Statoranordnung (34) eine Hülse eingebracht ist.

5. Maschine nach Anspruch 4, **dadurch gekennzeichnet, dass** die Hülse ein ferromagnetisches Material umfasst.

6. Maschine nach Anspruch 4 oder 5, **dadurch gekennzeichnet, dass** die Hülse an wenigstens dem einen Stirnende der Rotoranordnung (32), an welchem die Sensoranordnung (48) positioniert ist, in axialer Richtung über dieses Stirnende vorsteht.

## Claims

1. An electric machine, in particular a brushless DC motor, having a stator arrangement (34) and a rotor arrangement (32) that are arranged coaxially with respect to one another, the stator arrangement including a winding (38) and the rotor arrangement including a rotor body (40) having an annular cylindrical outer circumference and permanent magnets (44) embedded in the rotor body, wherein magnetic sensors (52) for measuring the axial stray field of the embedded permanent magnets (44) are disposed at an end face of the rotor body to determine the rotational position of the rotor body (40), wherein the permanent magnets (44) are arranged in the rotor body (40) in a spoke-like manner wherein their dimension in a radial direction is larger than their dimension in a tangential direction, and wherein the permanent magnets are magnetized tangentially, and wherein recesses (42) are formed in the rotor body (40) for receiving the permanent magnets (44), said recesses being open at at least the end face where the magnetic sensors are located, **characterized in that** the magnetic sensors are disposed on a circuit board (50) which lies essentially within the winding head of the winding (38), wherein the magnetic sensors are arranged on the circuit board on an annulus which is defined by the inner radius (r1) and the outer radius (r2) of the permanent magnets (44) and are immediately opposite to the end face of the rotor body, and wherein the recesses are closed at the outer circumference of the rotor body.

2. A machine according to claim 1, **characterized in that** the magnetic sensors (52) comprise Hall sensors, MR or GMR sensors.

3. A machine according to one of the preceding claims, **characterized in that** two, three, or four magnetic sensors (52) are disposed at the end face of the rotor body (40), offset in phase at 180°, 120° or 90°.

4. A machine according to one of the preceding claims, **characterized in that** a sleeve is inserted between the rotor arrangement (32) and the stator arrangement (34).

5. A machine according to claim 4, **characterized in that** the sleeve comprises a ferromagnetic material.

6. A machine according to claim 4 or 5, **characterized in that** the sleeve protrudes in an axial direction beyond at least the one end face of the rotor arrangement (32) at which the magnetic sensors are positioned.

## Revendications

1. Machine électrique, en particulier moteur à courant continu sans balais, comprenant un dispositif de stator (34) et un dispositif de rotor (32), qui est incorporé de manière coaxiale dans le dispositif de stator, le dispositif de stator présentant un bobinage (38) et le dispositif de rotor présentant un corps de rotor (40) avec un pourtour extérieur cylindrique et des aimants permanents (44) encastrés dans le corps de rotor, des capteurs magnétiques (52) pour la détection du champ de dispersion axial des aimants permanents (44) encastrés étant disposés à l'une des extrémités frontales du corps de rotor afin d'évaluer la position en rotation du corps de rotor (40), les aimants permanents (44) étant disposés dans le corps de rotor (40) à la manière de rayons, leur dimension en direction radiale étant supérieure à leur dimension en direction tangentielle, et les aimants permanents étant magnétisés dans la direction tangentielle, et des évidements (42) étant formés dans le corps de rotor (40) pour l'admission des aimants permanents (44), qui sont ouverts au moins à l'une des extrémités frontales, sur laquelle les capteurs magnétiques sont disposés
**caractérisée en ce que** les capteurs magnétiques sont disposés sur une plaque conductrice (50) qui, dans l'ensemble, arrive à se situer à l'intérieur de la tête de bobinage du bobinage (38), les capteurs magnétiques étant disposés sur la plaque conductrice sous la forme d'un anneau circulaire qui est délimité par le rayon interne (r₁) et le rayon externe (r₂) des aimants permanents, et étant situés à proximité immédiate de l'extrémité frontale du corps de rotor, et les évidements étant compris dans le pourtour externe du rotor.

2. Machine selon l'une des revendications précédente **caractérisée en ce que** les capteurs magnétiques (52) comprennent des capteurs Hall, des capteurs MR ou des capteurs GMR.

3. Machine selon l'une des revendications précédente **caractérisée en ce que** deux ou trois ou quatre capteurs magnétiques (52) sont disposés à l'extrémité frontale du corps de rotor (40) avec un décalage électrique de 180 °, de 120 ° ou de 90 °.

4. Machine selon l'une des revendications précédentes **caractérisée en ce qu'**une douille est insérée entre le dispositif de rotor (32) et le dispositif de stator (34).

5. Machine selon la revendication 4 **caractérisée en ce que** la douille comprend un matériau ferromagnétique.

6. Machine selon les revendications 4 ou 5 **caractérisée en ce que** la douille dépasse en direction axiale, sur au moins l'une des extrémités frontales du dispositif de rotor (32) où sont positionnés les capteurs (48), de cette extrémité frontale.
